# FASCICULE DE BREVET EUROPEEN

(11) **EP 1 030 200 B1**
(45) Date de publication et mention de la délivrance du brevet: **19.11.2008**
(21) Numéro de dépôt: 00400328.1
(22) Date de dépôt: 07.02.2000
(51) Int. Cl.: G02B 6/036, G02B 6/02, H04J 14/02

(54) **Fibre optique à grande surface effective et à forte dispersion chromatique**
Optische Faser mit grosser effektiver Fläche und starker chromatischer Dispersion
Optical fibre with large effective area and strong chromatic dispersion

(30) Priorité: 18.02.1999 FR 9902029
(43) Date de publication de la demande: 23.08.2000
(73) Titulaire: Draka Comteq B.V., 1083 HJ Amsterdam (NL)
(72) Inventeur: de Montmorillon, Louis-Anne, 75017 Paris (FR); Nouchi, Pascale, 78600 Maisons Laffitte (FR)
(74) Mandataire: Blokland, Arie

(56) Documents cités:
- EP-A- 0 779 524
- EP-A- 0 859 247
- EP-A- 0 883 002
- EP-A- 1 096 279
- EP-A- 1 154 294
- WO-A-98/04941
- US-A- 5 675 688
- M.KATO ET AL : "Anew design for dispersion-shifted fiber with an effective core area larger than 100um2 and good bending characteristics" OFC'98 OPTICAL FIBER COMMUNICATION CONFERENCE, vol. 2, 22 - 27 février 1998, pages 301-302, XP002137955 San Jose, CA,USA
- D.BAYART ET AL : "50-GHz channel- spacing analysis in nx2.5GHz/s systems" OFC'98 OPTICAL FIBER COMMUNICATION CONFERENCE, 22 - 27 février 1998, pages 122-123, XP002137956 San Jose,CA,USA
- NOUCHI P.: 'MAXIMUM EFFECTIVE AREA FOR NON-ZERO DISPERSION-SHIFTED FIBER' OFC '98 01 Janvier 1998, NEW YORK, NY : IEEE, US, pages 303 - 304, XP000961588
- HATTORI H.T.; SAFAAI-JAZI A.: 'FIBER DESIGNS WITH SIGNIFICANTLY REDUCED NONLINEARITY FOR VERY LONG DISTANCE TRANSMISSION' APPLIED OPTICS vol. 37, no. 15, 20 Mai 1998, OSA, OPTICAL SOCIETY OF AMERICA, WASHINGTON, DC, pages 3190 - 3197, XP000765275

## Description

La présente invention concerne le domaine des transmissions par fibre optique.

La demande de brevet européenne 1 154 294 concerne une fibre optique ayant une structure qui permet de réduire les pertes de transmission et les pertes par courbures. La gaine a une structure qui comporte une gaine intérieure située en périphérie du coeur et qui présente un indice de réfraction moyen plus petit que celui du coeur, et une gaine extérieure située en périphérie de la gaine intérieure et qui présente un indice de réfraction moyen plus petit que celui du coeur mais plus grand que celui de la gaine intrérieure.

La demande de brevet européenne 1 096 279 concerne une fibre optique utilisée dans une ligne de transmission optique d'un système de transmission multiplexé en longueur d'onde (WDM, de l'anglais Wavelength Division Multiplexing). Le septième mode de réalisation de cette demande présente une aire effective de 122 µm² à la longueur d'onde de 1550 nm et une valeur de dispersion chromatique égale à 2,21 ps/nm-km à cette longueur d'onde de 1550 nm.

La demande de brevet européenne 0 779 524 concerne une fibre optique monomode qui présente une grande aire effective, i.e. plus élevée qu'environ 110 µm² à la longueur d'onde de 1550 nm. Le comportement en microcourbure de ces fibres optiques est moindre que celui des fibres monomodes standard.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueurs d'onde, il est avantageux de gérer la dispersion chromatique, notamment pour des débits par canal supérieurs ou égaux à 10 Gbit/s; l'objectif est d'obtenir, pour toutes les valeurs de longueur d'onde du multiplex, une compensation chromatique cumulée sensiblement nulle sur la liaison, de sorte à limiter l'élargissement des impulsions. Une valeur cumulée de quelques centaines de ps/nm pour la dispersion est acceptable. Il est aussi intéressant d'éviter pour les longueurs d'onde utilisées dans le système les valeurs nulles de la dispersion chromatique, pour lesquelles les effets non-linéaires sont plus importants. Enfin, il est aussi intéressant de limiter la pente de dispersion chromatique sur la plage du multiplex de sorte à éviter ou limiter les distorsions entre les canaux du multiplex.

On utilise classiquement comme fibre de ligne pour les systèmes de transmission à fibres optiques des fibres à saut d'indice comme fibre de ligne. La demanderesse commercialise ainsi sous référence ASMF 200 une fibre monomode à saut d'indice présentant une longueur d'onde λ₀ d'annulation de la dispersion chromatique comprise entre 1300 et 1320 nm, et une dispersion chromatique de 3,5 ps/(nm.km) dans une plage de 1285-1330 nm, et de 17 ps/(nm.km) à 1550 nm. La pente de dispersion chromatique à 1550 nm est de l'ordre de 0,056 ps/(nm².km). Cette fibre présente en outre une surface effective de l'ordre de 80 µm².

Sont aussi apparues sur le marché des fibres à dispersion décalée, ou DSF (acronyme de l'anglais "Dispersion shifted fibers"). Ces fibres sont telles qu'à la longueur d'onde de transmission à laquelle elles sont utilisées, qui est en général différente de la longueur d'onde de 1,3 µm pour laquelle la dispersion de la silice est sensiblement nulle, la dispersion chromatique est sensiblement nulle; c'est à dire que la dispersion chromatique de la silice, non nulle, est compensée - d'où l'emploi du terme décalé - par une augmentation de l'écart d'indice Δn entre le coeur de la fibre et la gaine optique. Cet écart d'indice permet de décaler la longueur d'onde pour laquelle la dispersion chromatique est nulle; il est obtenu par l'introduction de dopants dans la préforme, lors de la fabrication de celle-ci, par exemple par un processus de MCVD connu en soi, et qui n'est pas décrit plus en détail ici.

On qualifie de NZ-DSF (acronyme de l'anglais "non-zero dispersion shifted fibers") des fibres à dispersion décalée, présentant une dispersion chromatique non-nulle pour les longueurs d'onde auxquelles elles sont utilisées. Ces fibres présentent pour ces longueurs d'onde une dispersion chromatique faible, typiquement inférieure à 6 ps/(nm.km) à 1550 nm.

Un exemple de telles fibres est donné dans la demande de brevet français déposée le 05.10.98 par la demanderesse sous le numéro 98 12431 qui porte le - titre "Fibre optique monomode à dispersion décalée à grande aire effective" (référence interne F°101783) et qui décrit une fibre, présentant une grande aire effective, typiquement supérieure à 100 µm². La dispersion chromatique de la fibre dans cette demande, à 1550 nm, est voisine de 8 ps/(nm.km).

Il est connu que les effets non linéaires sont d'autant moins importants que la surface effective de la fibre est importante. Ainsi, M. Kato et autres, A new design for dispersion shifted fiber with an effective core area larger than 100 µm² and good bending characteristics, ThK1, OFC'98 Technical Digest, explique que les effets non linéaires dans les fibres pourraient devenir les limitations dominantes du point de vue de la capacité et de la distance de transmission pour des systèmes de transmission amplifiés à haute capacité et sur de longues distances. Ce document précise qu'une solution possible consiste à augmenter l'aire effective des fibres, ce qui permet d'obtenir une puissance supérieure et un intervalle plus important entre répéteurs. Ce document propose une fibre présentant un profil coaxial, entouré d'un piédestal, avec une aire effective de 146 µm² et une longueur d'onde λ₀, pour laquelle la dispersion chromatique s'annule, de 1500 nm. La dispersion chromatique à 1550 nm est faible, et la pente de dispersion à cette longueur d'onde est de 0,09 ps/(nm².km)

US-A-5 675 690 propose une fibre optique monomode, dont le coeur présente une partie centrale d'indice inférieur à celui de la gaine, un anneau d'indice supérieur à celui de la gaine, et un anneau composite présentant une partie d'indice inférieur à celui de la gaine, et une partie d'indice supérieur à celui de la gaine. Dans ce document, la surface effective est de l'ordre de 85 µm², et la dispersion chromatique s'annule pour une longueur d'onde de l'ordre de 1550 nm. Il s'agit d'une fibre DSF au sens de la définition donnée ci-dessus.

L'article "Maximum effective area for non-zéro dispersion-shifted fiber" P. Nouchi, OFC 98 Technical Digest, Optical Fiber Communication Conference and Exhibit, San José (CA), 22-27 February 1998 (XP 000961588); pages 303 and 304, propose une fibre optique présentant, à une longueur d'onde de 1550 nm, une aire effective supérieure ou égale à 100 µm² et une dispersion chromatique de +4 ps/nm/km. Cette fibre présente un profil d'indice coaxial avec un anneau.

L'invention propose une fibre optique, qui présente à la fois une forte surface effective, et en même temps une valeur de dispersion chromatique qui soit de l'ordre de celle des fibres à saut d'indice connues. L'invention fournit ainsi une fibre qui transmet les signaux à une forte puissance, et dans laquelle les effets non linéaires sont limités

Plus précisément, l'invention propose une fibre optique, présentant, pour une longueur d'onde de 1550 nm :
- une aire effective supérieure ou égale à 100 µm²;
- une dispersion chromatique supérieure ou égale à 14 ps/(nm.km) et inférieure ou égale à 21 ps/(nm.km);
- une sensibilité aux micro-courbures inférieure ou égale à 1 la sensibilité aux micro-courbures est évaluée par rapport à la fibre ASMF 200, et présentant un profil d'indice comme défini dans les revendications 1, 2 ou 3.

La fibre peut présenter pour longueur d'onde de 1550 nm une pente de dispersion chromatique inférieure ou égale en valeur absolue à 0,07 ps/(nm².km)

Dans un mode de réalisation, la fibre présente pour une longueur d'onde de 1550 nm des pertes par courbures inférieures ou égales à 0,05 dB, et de préférence inférieures à 5.10⁻⁴dB.

L'invention propose aussi un système de transmission à fibre optique à multiplexage en longueurs d'onde, comprenant comme fibre de ligne une telle fibre. Ce système comprend avantageusement de la fibre de compensation de dispersion.

D'autres caractéristiques et avantages de l'invention apparaîtront à la lecture de la description qui suit de modes de réalisation de l'invention, donnés à titre d'exemple et en référence aux dessins annexés, qui montrent
- figures 1 à 7, des représentations schématiques de profils d'indice d'une fibre selon différents modes de réalisation de l'invention;
- figure 8, un graphe de la dispersion chromatique en fonction de la longueur d'onde pour les différents modes de réalisation de l'invention;
- figure 9, un graphe de la pente de dispersion chromatique en fonction de la longueur d'onde pour les différents modes de réalisation de l'invention

L'invention propose une fibre, dans laquelle la surface effective est supérieure ou égale à 100 µm², et qui présente en outre une dispersion chromatique à 1550 nm supérieure ou égale à 14 ps/(nm.km) et inférieure ou égale à 21 ps/(nm.km) ;

L'invention permet ainsi de conserver les avantages techniques apportés par l'utilisation de la fibre à saut d'indice connue, et notamment la diminution des effets non-linéaires du fait de la valeur importante de la dispersion chromatique, typiquement au-dessus de 14 ps/(nm.km).

Elle apporte en outre l'avantage d'une nette augmentation de la surface effective par rapport à cette fibre à saut d'indice connue. L'invention fournit ainsi une fibre qui transmet les signaux à une forte puissance, et dans laquelle les effets non linéaires sont limités.

Les caractéristiques de la fibre de l'invention sont donc les suivantes:
- aire effective supérieure ou égale à 100 µm², et de préférence à 105 µm²
- dispersion chromatique supérieure ou égale à 14 ps/(nm.km), et inférieure ou égale à 21 ps/(nm.km);
- sensibilité aux micro-courbures à 1550 nm inférieure ou égale à 1 la sensibilité aux micro-courbures est évaluée par rapport à la fibre ASMF 200.
- et de préférence
- pente de dispersion chromatique à 1550 nm inférieure en valeur absolue à 0,07 ps/(nm².km), de préférence voisine de 0,06 ps/(nm².km);
- pertes par courbure 1550 nm inférieures ou égales à 0,05 dB, ou de préférence 5.10⁻⁴ dB.

De façon connue en soi, les pertes par courbure sont évaluées en mesurant les pertes induites dans une fibre par l'enroulement de 100 tours de la fibre autour d'un tambour de rayon 30 mm. La sensibilité aux micro-courbures est évaluée de façon relative, par rapport à la fibre commercialisée par la demanderesse sous la référence ASMF 200; on peut employer les méthodes de mesure de la sensibilité aux micro-courbures, connues en soi.

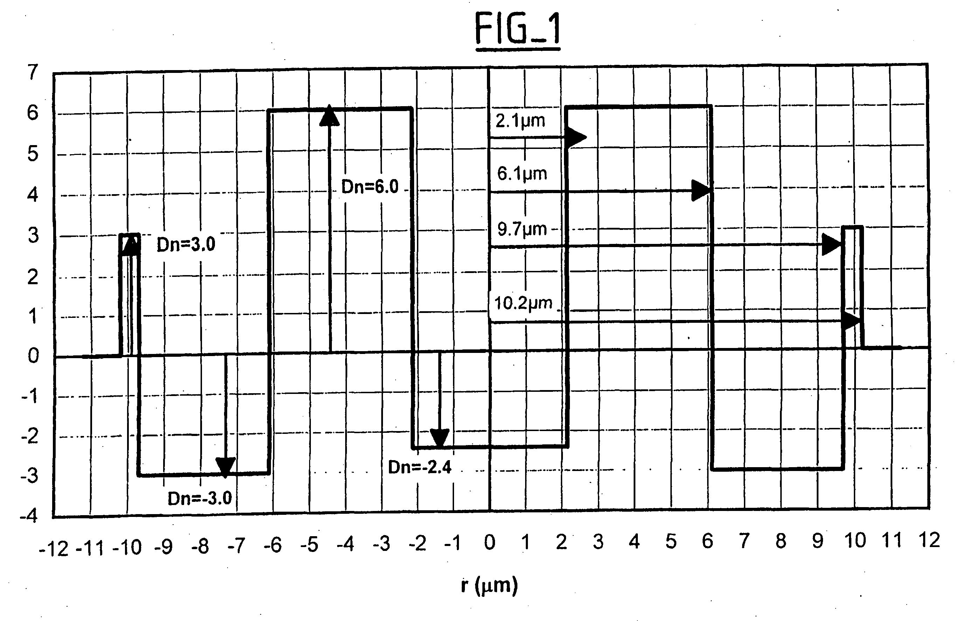

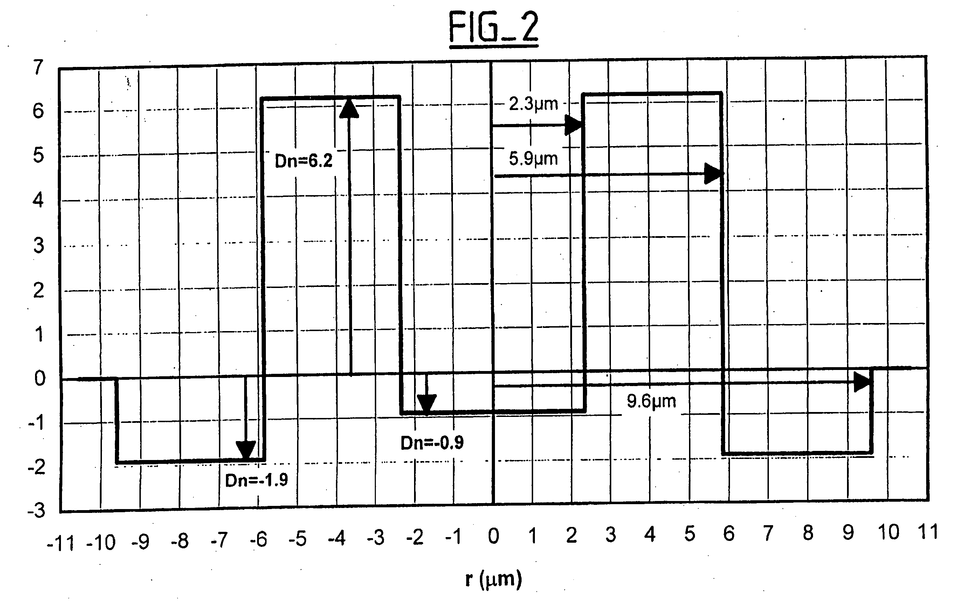

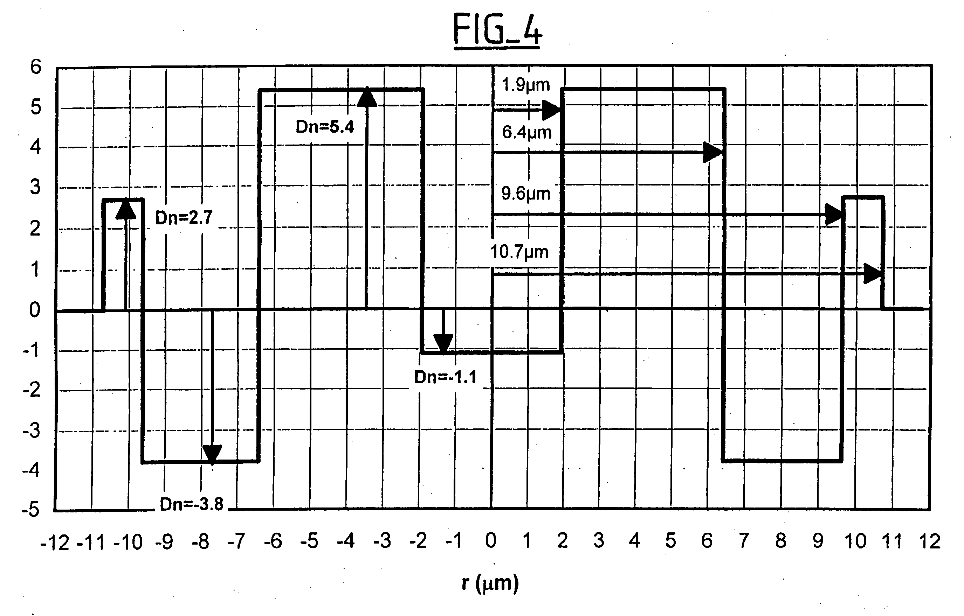

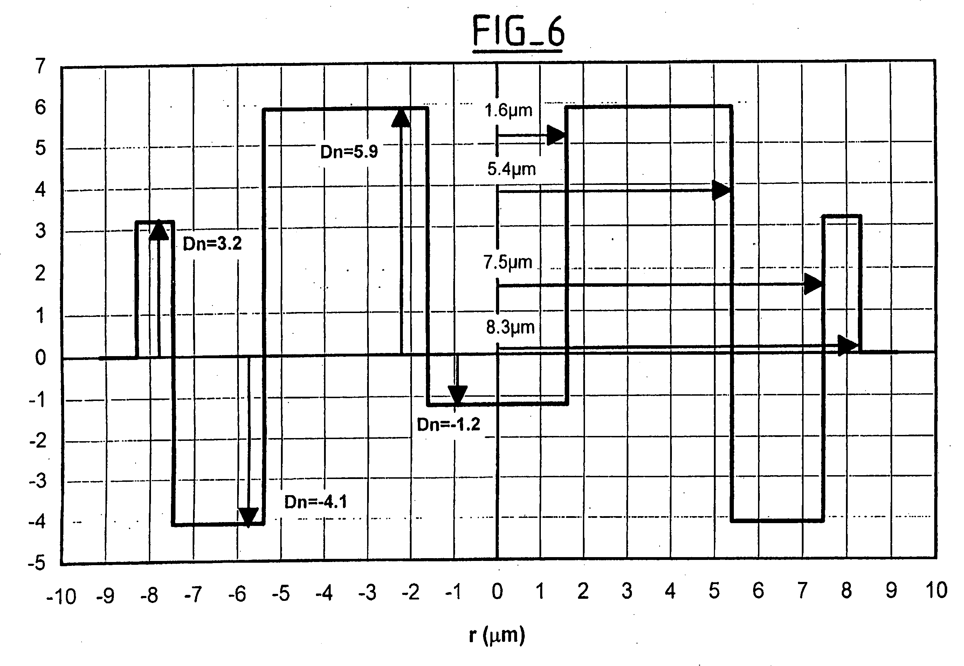

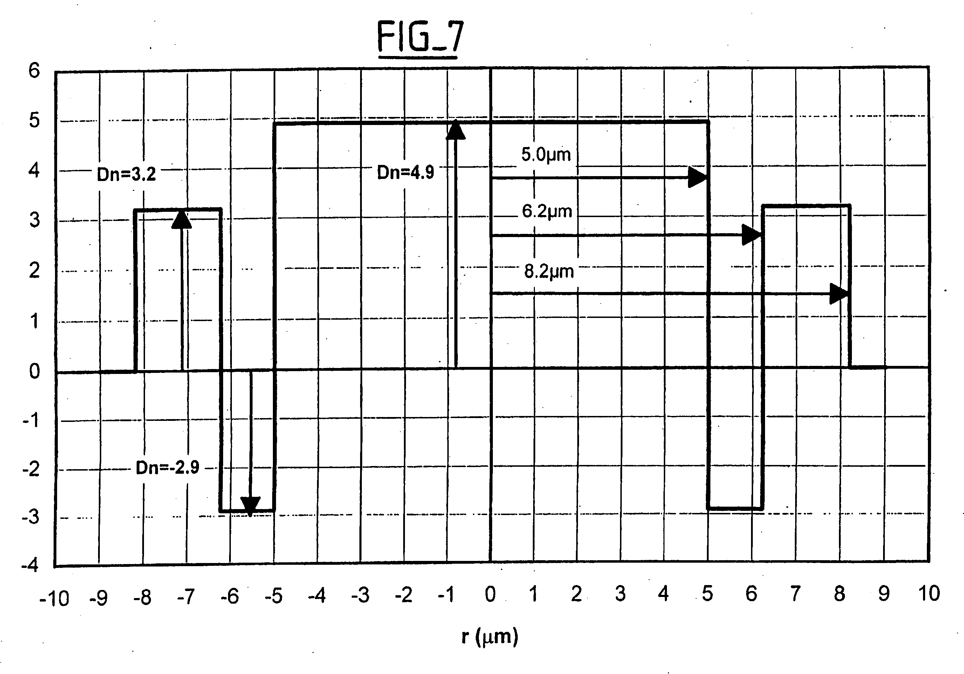

On donne dans la suite de la description en référence aux figures des exemples de profils de fibre permettant d'obtenir de telles valeurs. Les figures 1, 4 et 6 sont des exemples de fibres avec un profil coaxial avec anneau. Les figures 2, 3 et 5 sont des exemples de fibres avec un profil coaxial, entouré d'une partie enterrée. La figure 7 est un exemple de fibre avec un profil en rectangle avec anneau, ou encore profil à saut d'indice avec anneau.

Les figures 1, 4 et 6 montrent respectivement une représentation schématique du profil d'indice de différentes fibres selon un premier mode de réalisation de l'invention; dans ce mode de réalisation, le profil d'indice est un profil d'indice du type coaxial avec anneau, qui présente, en partant du centre de la fibre:
- une partie centrale d'indice sensiblement constant;
- une première partie annulaire d'indice supérieur à l'indice de la gaine, et supérieur à l'indice de la partie centrale,

l'ensemble constituant une fibre à profil dit "coaxial".

Autour de la première partie annulaire, la fibre présente une partie enterrée d'indice inférieur ou sensiblement égal à celui de la gaine, puis une deuxième partie annulaire d'indice supérieur à celui de la gaine, formant un anneau autour du profil coaxial.

Les valeurs d'indices et de rayons dans les différents exemples des figures 1, 4 et 6 sont données dans le tableau suivant. Les rayons sont donnés en micromètres, et les indices sont à multiplier par 10⁻³. Les rayons r₁, r₂, r₃ et r₄ sont les rayons extérieurs respectifs de la partie centrale, de la première partie annulaire, de la partie enterrée, et de la deuxième partie annulaire. Les indices Δn₁ à Δn₄ sont les différences respectives de l'indice de la partie centrale, de la première partie annulaire, de la partie enterrée, et de la deuxième partie annulaire avec l'indice de la gaine de la fibre.

### Rayons

| | r₁ | r₂ | r₃ | r₄ |
|---|---|---|---|---|
| figure 1 | 2,1 | 6,1 | 9,7 | 10,2 |
| figure 4 | 1,9 | 6,4 | 9,6 | 10,7 |
| figure 6 | 1,6 | 5,4 | 7,5 | 8,3 |

### Indices (.10⁻³)

| | Δn₁ | Δn₂ | Δn₃ | Δn₄ |
|---|---|---|---|---|
| figure 1 | -2,4 | 6,0 | -3,0 | 3,0 |
| figure 4 | -1,1 | 5,4 | -3,8 | 2,7 |
| figure 6 | -1,2 | 5,9 | -4,1 | 3,2 |

Ces divers modes de réalisation à profil coaxial plus anneau permettent d'obtenir des fibres selon l'invention, dont les caractéristiques sont données dans le tableau suivant, sur les lignes correspondantes

| λ_{cth} (nm) | λ₀ (nm) | dC/dλ ps/(nm².km) | C ps/(nm.km) | W02 (µm) | S_{eff} (µm²) | PC (dB) | S_{µc} |
|---|---|---|---|---|---|---|---|
| 1710 | 1323 | 0,065 | 17,4 | 5,2 | 131 | 1,4.10⁻⁴ | 1 |
| 1690 | 1299 | 0,063 | 19,4 | 5,4 | 131 | 1,3.10⁻⁴ | 0,95 |
| 1540 | 1314 | 0,060 | 17,3 | 5,1 | 104 | 8,1.10⁻⁴ | 1 |

Dans le tableau, λ_{cth} est la longueur d'onde de coupure théorique de la fibre. Dans la pratique, la longueur d'onde de coupure de la fibre en câble présente une valeur qui est plus faible que cette valeur théorique, de 200 à 400 nm. On constate de la sorte que les exemples de fibres de l'invention sont toujours monomodes en câble, dans la plage de longueur d'onde utile, par exemple entre 1530 et 1630 nm. λ₀ est la valeur de la longueur d'onde d'annulation de la dispersion chromatique. dC/dλ est la pente de dispersion chromatique mesurée à 1550 nm, en ps/(nm².km). C est la dispersion chromatique mesurée à 1550 nm, en ps/(nm.km). W₀₂ est le rayon de mode, S_{eff} l'aire effective, PC les pertes par courbures, et S_{µc} la sensibilité aux micro-courbures, tous considérés à 1550 nm. On constate que les fibres des figures 1, 4 et 6 présentent les caractéristiques de propagation de l'invention.

Des variations sont possibles autour des valeurs de consigne des rayons et des indices données dans les tableaux ci-dessus, et représentées aux figures 1, 4 et 6 tout en conservant les caractéristiques de propagation de l'invention. De façon générale, des variations des rayons de ±10% par rapport aux valeurs de consigne sont possibles. Des variations des indices de ±0,5.10⁻³ autour de la valeur de consigne sont possibles.

Les figures 2, 3 et 5 montrent des représentations schématiques du profil d'indice de fibres selon un deuxième mode de réalisation de l'invention; le profil de ces figures est un profil coaxial, entouré d'une partie enterrée. La fibre présente donc, en partant du centre:
- une partie centrale, d'indice sensiblement constant;
- une partie annulaire d'indice supérieur à l'indice de la gaine, et supérieur à l'indice de la partie centrale;
- une partie enterrée d'indice inférieur à celui de la gaine.

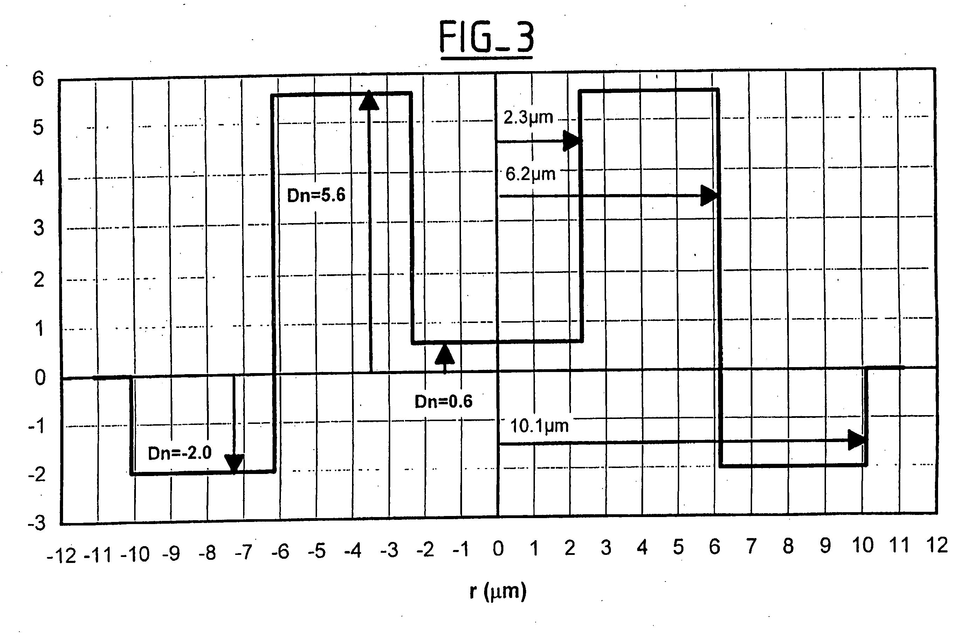

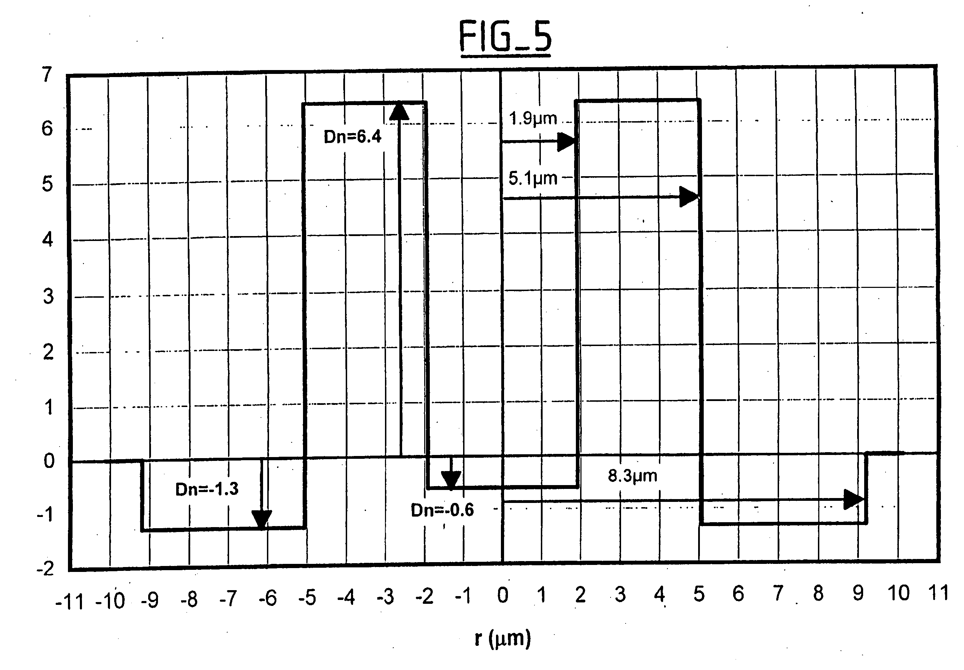

L'indice de la partie centrale peut être positif, comme dans l'exemple de la figure 3; il peut aussi être négatif comme dans les exemples des figures 2 et 5.

Les valeurs d'indice et de rayon dans les différents exemples des figures 2, 3 et 5 sont données dans le tableau suivant. Les rayons sont donnés en micromètres, et les indices sont à multiplier par 10⁻³ Les rayons r₁, r₂ et r₃ sont les rayons extérieurs respectifs de la partie centrale, de la partie enterrée et de la partie annulaire. Les indices Δn₁ à An₃ sont les différences respectives de l'indice de la partie centrale, de la partie annulaire et de la partie enterrée avec l'indice de la gaine de la fibre.

| | r₁ | r₂ | r₃ | Δn₁ | Δn₂ | Δn₃ |
|---|---|---|---|---|---|---|
| figure 2 | 2,3 | 5,9 | 9,6 | -0,9 | 6,2 | -1,9 |
| figure 3 | 2,3 | 6,2 | 10,1 | 0,6 | 5,6 | -2,0 |
| figure 5 | 1,9 | 5,1 | 8,3 | -0,6 | 6,4 | -1,3 |

Comme dans le cas des figures 1, 4 et 6, des variations autour de ces valeurs de consigne sont possibles. Une tolérance de ±10% sur les valeurs des rayons, et de ±0,5.10⁻³ sur les valeurs des indices est appropriée.

Ces divers modes de réalisation à profil coaxial plus anneau permettent d'obtenir des fibres selon l'invention, dont les caractéristiques sont données dans le tableau suivant, sur les lignes correspondantes :

| λ_{cth} (nm) | λ₀ (nm) | dC/dλ ps/(nm².km) | C ps/(nm.km) | W02 (µm) | S_{eff} (µm²) | PC (dB) | S_{µc} |
|---|---|---|---|---|---|---|---|
| 1700 | 1326 | 0,065 | 17,4 | 5,3 | 130 | 1,4.10⁻⁴ | 0,99 |
| 1700 | 1303 | 0,064 | 19,4 | 5,6 | 133 | 1,0.10⁻⁴ | 0,95 |
| 1550 | 1322 | 0,064 | 17,4 | 5,1 | 107 | 3,8.10⁻⁴ | 0,96 |

On constate de nouveau que les fibres des figures 2, 3 et 5 satisfont les caractéristiques de propagation préférées.

La figure 7 montre un exemple de profil d'indice selon un troisième mode de réalisation de l'invention. Le profil d'indice de la figure 7 est un profil en rectangle avec anneau, appelé aussi profil à saut d'indice avec anneau. En partant du centre, la fibre présente:
- une partie centrale d'indice supérieur à l'indice de la gaine;
- une partie enterrée d'indice inférieur à celui de la gaine;
- une partie annulaire d'indice supérieur à l'indice de la gaine. Les rayons extérieurs r₁ à r₃ de ces parties sont les suivants :
   r₁ = 5,0 µm;
   r₂ = 6,2 µm;
   r₃ = 8,2 µm.

Les différences entre les indices de ces différentes parties et l'indice de la gaine de la fibre sont les suivantes:
Δn₁ = 4,9.10⁻³;
Δn₂ = -2,9.10⁻³;
Δn₁ = 3,2.10⁻³.

De nouveau, on peut obtenir les caractéristiques de propagation de l'invention dans des plages autour de ces valeurs de consigne. Comme dans les autres modes de réalisation, des variations de ±10% autour des valeurs de consigne des rayons et des variations de ±0,5.10⁻³ autour des valeurs d'indice sont acceptables.

Ces valeurs permettent d'obtenir une fibre présentant les caractéristiques suivantes:
- longueur d'onde de coupure théorique λ_{cth} : 1710 nm
- longueur d'onde λ₀ d'annulation de la dispersion chromatique : 1310 nm;
- pente de dispersion chromatique à 1550 nm : 0,062 ps/(nm².km);
- dispersion chromatique à 1550 nm : 17,4 ps/(nm.km);
- rayon de mode W₀₂ à 1550 nm : 5,7 µm;
- aire effective à 1550 nm : 100 µm²;
- atténuation du fait des courbures : 3,3.10⁻⁴ dB;
- sensibilité aux micro-courbures à 1550 nm : 0,91.

Comme dans les modes de réalisation précédents, la fibre du troisième mode de réalisation présente les caractéristiques de propagation préférées de l'invention.

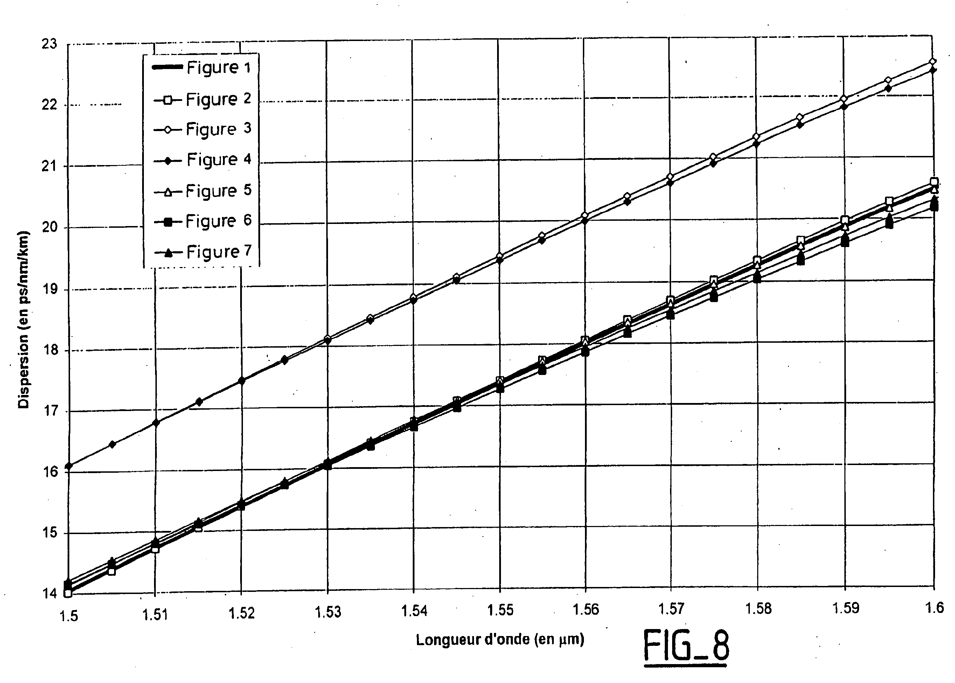

La figure 8 montre un graphe de la dispersion en fonction de la longueur d'onde pour les différentes fibres selon l'invention; on a porté à la figure en ordonnée la longueur d'onde en µm, entre 1,5 et 1,6 µm. On a porté en abscisse la dispersion chromatique à 1550 nm, en ps/(nm.km). La figure montre les variations de la dispersion en fonction de la longueur d'onde pour les différentes fibres décrites plus haut. On constate sur la figure que la dispersion chromatique est comprise entre 17 et 20 ps/(nm.km) à 1550 nm pour toutes les fibres, et reste comprise entre 14 et 23 ps/(nm.km) pour des valeurs de longueur d'onde comprises entre 1500 et 1600 nm, pour toutes les fibres données à titre d'exemple.

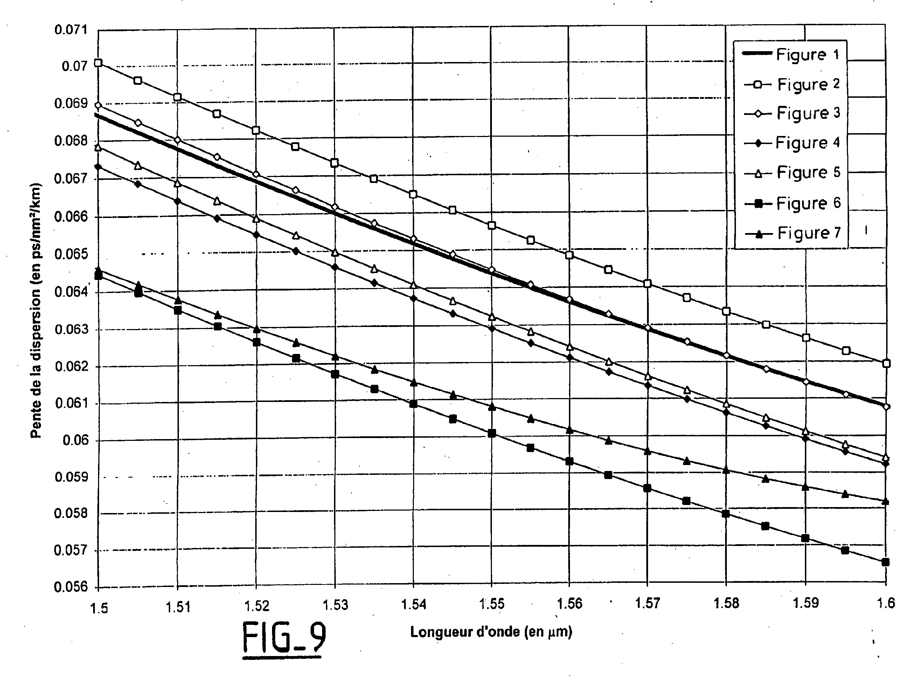

La figure 9 montre un graphe de la pente de dispersion en fonction de la longueur d'onde pour les différentes fibres données à titre d'exemple. Est portée en abscisse la longueur d'onde en micromètres, et en ordonnée la pente de la dispersion chromatique en ps/(nm².km). Les différentes courbes donnent les variations de la pente de dispersion chromatique, en fonction de la longueur d'onde, pour les différentes fibres décrites plus haut.

On constate sur la figure que la pente de la dispersion chromatique à 1550 nm reste dans tous les cas comprise entre 0,06 et 0,066 ps/(nm².km). Entre 1500 et 1600 nm, la pente de dispersion chromatique des différentes fibres de l'invention reste comprise entre 0,056 et 0, 07 ps/(nm².km).

L'invention peut être fabriquée par l'homme du métier à l'aide de techniques connues, comme le MCVD ou les autres techniques couramment utilisées pour la fabrication des fibres optiques.

Elle s'applique notamment à la réalisation de systèmes de transmission à fibre optique, dans lesquels la fibre de l'invention peut servir de fibre de ligne. On peut alors prévoir aussi de la fibre de compensation de dispersion (DCF) dans le système.

Bien entendu, la présente invention n'est pas limitée aux exemples et modes de réalisation décrits et représentés, mais elle est susceptible de nombreuses variantes accessibles à l'homme de l'art. Il est clair que les profils des figures 1 à 7 ne sont donnés qu'à titre d'exemple, et que d'autres profils peuvent permettre d'obtenir des fibres présentant les caractéristiques de l'invention.

## Revendications

1. Une fibre optique, présentant un profil d'indice coaxial avec un anneau, qui présente en partant du centre de la fibre
- une partie centrale d'indice sensiblement constant;
- une première partie annulaire d'indice supérieur à l'indice de la gaine, et supérieure à l'indice de la partie centrale, et autour de la première partie annulaire une partie enterrée d'indice inférieur ou sensiblement égal à celui de la gaine, puis une deuxième partie annulaire d'indice supérieur à celui de la gaine, **caractérisée en ce qu'**elle présente pour une longueur d'onde de 1550 nm:
- une aire effective supérieure ou égale à 100 µm²;
- une dispersion chromatique supérieure ou égale à 14 ps/(nm.km) et inférieure ou égale à 21 ps/(nm.km), et
- une sensibilité aux micro-courbures inférieure ou égale à 1, la sensibilité aux micro-courbures est évaluée par rapport à la fibre ASMF 100.

2. Une fibre optique, présentant un profil d'indice coaxial entouré d'une partie enterrée, qui présente en partant du centre de la fibre
- une partie centrale, d'indice sensiblement constant;
- une partie annulaire d'indice supérieur à l'indice de la gaine, et supérieur à l'indice de la partie centrale;
- une partie enterrée d'indice inférieur à celui de la gaine, **caractérisée en ce qu'**elle présente pour une longueur d'onde de 1550 nm:
- une aire effective supérieure ou égale à 100 µm²;
- une dispersion chromatique supérieure ou égale à 14 ps/(nm.km) et inférieure ou égale à 21 ps/(nm.km), et
- une sensibilité aux micro-courbures inférieure ou égale à 1, la sensibilité aux micro-courbures est évaluée par rapport à la fibre ASMF 100.

3. Une fibre optique, présentant un profil d'indice à saut d'indice avec un anneau, qui présente en partant du centre de la fibre
- une partie centrale d'indice supérieur à l'indice de la gaine,:
- une partie enterrée d'indice inférieur à celui de la gaine;
- une partie annulaire d'indice supérieur à l'indice de la gaine, **caractérisée en ce qu'**elle présente pour une longueur d'onde de 1550 nm:
une aire effective supérieure ou égale à 100 µm²;
une dispersion chromatique supérieure ou égale à 14 ps/(nm.km) et inférieure ou égale à 21 ps/(nm.km), et
- une sensibilité aux micro-courbures inférieure ou égale à 1,

4. La fibre selon l'une des revendications 1 à 3, **caractérisée en ce qu'**elle présente pour une longueur d'onde de 1550 nm une pente de dispersion chromatique inférieure ou égale en valeur absolue à 0,07 ps/(nm².km).

5. La fibre selon l'une des revendications 1 à 4, **caractérisée en ce qu'**elle présente pour une longueur d'onde de 1550 nm des pertes par courbures inférieures ou égales à 0,05 dB, et de préférence inférieures à 5.10⁻⁴ dB.

6. La fibre selon l'une des revendications 1 à 5, **caractérisée en ce que** son aire effective 1550 nm est supérieure ou égale à 105 µm².

7. Un système de transmission à fibre optique à multiplexage en longueurs d'onde, comprenant comme fibre de ligne de la fibre selon l'une des revendications 1 à 6.

8. Le système selon la revendication 7, **caractérisée en ce qu'**il comprend en outre de la fibre de compensation de dispersion.

## Claims

1. An optical fibre, having a coaxial index profile with a ring, which has, starting from the centre of the fibre,
- a central portion having a substantially constant index;
- a first annular portion having an index greater than the index of the cladding and greater than the index of the central portion, and, around the first annular portion, a depressed portion having an index less than or substantially equal to that of the cladding, and then a second annular portion having an index greater than that of the cladding, **characterised in that** it has, for a wavelength of 1550 nm:
- an effective area greater than or equal to 100 µm²;
- a chromatic dispersion greater than or equal to 14 ps/(nm.km) and less than or equal to 21 ps/(nm.km), and
- a sensitivity to microbending less than or equal to 1, the sensitivity to microbending being assessed in relation to the ASMF 200 fibre.

2. An optical fibre, having a coaxial index profile surrounded by a depressed portion, which has, starting from the centre of the fibre,
- a central portion having a substantially constant index;
- an annular portion having an index greater than the index of the cladding and greater than the index of the central portion;
- a depressed portion having an index less than that of the cladding, **characterised in that** it has, for a wavelength of 1550 nm:
- an effective area greater than or equal to 100 µm² ;
- a chromatic dispersion greater than or equal to 14 ps/(nm.km) and less than or equal to 21 ps/(nm.km), and
- a sensitivity to microbending less than or equal to 1, the sensitivity to microbending being assessed in relation to the ASMF 200 fibre.

3. An optical fibre, having a stepped-index index profile with a ring, which has, starting from the centre of the fibre,
- a central portion having an index greater than the index of the cladding;
- a depressed portion having an index less than that of the cladding;
- an annular portion having an index greater than the index of the cladding, **characterised in that** it has, for a wavelength of 1550 nm:
- an effective area greater than or equal to 100 µm²;
- a chromatic dispersion greater than or equal to 14 ps/(nm.km) and less than or equal to 21 ps/(nm.km), and
- a sensitivity to microbending less than or equal to 1, the sensitivity to microbending being assessed in relation to the ASMF 200 fibre.

4. The fibre according to one of claims 1 to 3, **characterised in that** it has, for a wavelength of 1550 nm, a chromatic dispersion slope less than or equal to 0.07 ps/(nm².km) in terms of absolute value.

5. The fibre according to one of claims 1 to 4, **characterised in that** it has, for a wavelength of 1550 nm, bending losses less than or equal to 0.05 dB, preferably less than 5 x 10⁻⁴ dB.

6. The fibre according to one of claims 1 to 5, **characterised in that** its effective area at 1550 nm is greater than or equal to 105 µm².

7. A wavelength multiplexing optical fibre transmission system comprising fibre according to one of claims 1 to 6 as line fibre.

8. The system according to claim 7, **characterised in that** it additionally comprises dispersion-compensating fibre.

## Patentansprüche

1. Optische Faser, welche ein koaxiales Indexprofil mit einem Ring aufweist, welcher ausgehend vom Zentrum der Faser aufweist:
- einen zentralen Abschnitt mit im Wesentlichen konstantem Index,
- einen ersten ringförmigen Abschnitt mit Index größer als dem Index der Hülle und größer als dem Index des zentralen Abschnitts, und um den ersten ringförmigen Abschnitt einen vergrabenen Abschnitt mit Index kleiner oder näherungsweise gleich demjenigen der Hülle gefolgt von einem zweiten ringförmigen Abschnitt mit Index größer als demjenigen der Hülle, **dadurch gekennzeichnet, dass** sie für eine Wellenlänge von 1550 nm aufweist:
- eine effektive Fläche größer oder gleich 100 µm²,
- eine chromatische Dispersion größer oder gleich 14 ps/(nm.km) und kleiner oder gleich 21 ps/(nm.km) und
- eine Empfindlichkeit gegenüber Mikrokrümmungen kleiner oder gleich 1, wobei die Empfindlichkeit gegenüber Mikrokrümmungen im Verhältnis zu der Faser ASMF 200 bewertet wird.

2. Optische Faser, welche ein koaxiales Indexprofil aufweist, welches von einem vergrabenen Abschnitt umgeben ist, welcher ausgehend vom Zentrum der Faser aufweist:
- einen zentralen Abschnitt mit im Wesentlichen konstantem Index,
- einen ringförmigen Abschnitt mit Index größer als dem Index der Hülle und größer als dem Index des zentralen Abschnitts,
- einen vergrabenen Abschnitt mit Index kleiner als demjenigen der Hülle,
**dadurch gekennzeichnet, dass** sie für eine Wellenlänge von 1550 nm aufweist:
- eine effektive Fläche größer oder gleich 100 µm²,
- eine chromatische Dispersion größer oder gleich 14 ps/(nm·km) und kleiner oder gleich 21 ps/(nm.km), und
- eine Empfindlichkeit gegenüber Mikrokrümmungen kleiner oder gleich 1, wobei die Empfindlichkeit gegenüber Mikrokrümmungen im Verhältnis zu der Faser ASMF 200 bewertet wird.

3. Optische Faser, welche ein Indexprofil mit Indexsprung mit einem Ring aufweist, welcher ausgehend vom Zentrum der Faser aufweist:
- einen zentralen Abschnitt mit Index größer als dem Index der Hülle,
- einen vergrabenen Abschnitt mit Index kleiner als demjenigen der Hülle,
- einen ringförmigen Abschnitt mit Index größer als dem Index der Hülle,
**dadurch gekennzeichnet, dass** sie für eine Wellenlänge von 1550 nm aufweist:
- eine effektive Fläche größer oder gleich 100 µm²,
- eine chromatische Dispersion größer oder gleich 14 ps/(nm.km) und kleiner oder gleich 21 ps/(nm.km), und
- eine Empfindlichkeit gegenüber Mikrokrümmungen kleiner oder gleich 1, wobei die Empfindlichkeit gegenüber Mikrokrümmungen im Verhältnis zu der Faser ASMF 200 bewertet wird.

4. Faser gemäß einem der Ansprüche 1-3, **dadurch gekennzeichnet, dass** sie für eine Wellenlänge von 1550 nm eine Steigung der chromatischen Dispersion aufweist, deren Absolutwert kleiner oder gleich 0,07 ps/(nm²·km) ist.

5. Faser gemäß einem der Ansprüche 1-4, **dadurch gekennzeichnet, dass** sie für eine Wellenlänge von 1550 nm Verluste durch Krümmungen kleiner oder gleich 0,05 dB und bevorzugt kleiner als 5·10⁻⁴ dB aufweist.

6. Faser gemäß einem der Ansprüche 1-5, **dadurch gekennzeichnet, dass** ihre effektive Fläche bei 1550 nm größer oder gleich 105 µm² ist.

7. System zur Übertragung mit optischer Faser mit Wellenlängenmultiplexen, umfassend Faser gemäß einem der Ansprüche 1-6 als Leitungsfaser.

8. System gemäß Anspruch 7, **dadurch gekennzeichnet, dass** es zudem Dispersionskompensationsfaser umfasst.
